# EUROPEAN PATENT APPLICATION

(11) **EP 3 892 846 A1**
(43) Date of publication of application: **13.10.2021**
(21) Application number: 19893135.4
(22) Date of filing: 28.11.2019
(51) Int. Cl.: F02M 21/02, F02D 19/02, F02B 63/04, F17C 5/06

(54) **SYSTEM FOR PRESSURIZING GAS FOR STATIONARY MOTORS AND GAS-PRESSURIZING KIT FOR STATIONARY MOTORS**

(30) Priority: 06.12.2018 BR 102018075301
(71) Applicant: IVECO S.P.A., 10156 Torino (IT)
(72) Inventor: LOPES DA ROCHA, Ítalo, 31330-680 Belo Horizonte (BR); DE NORONHA MENDES, Luiz Augusto, 32670-280 Betim (BR); DAVID SARMENTO, Diego Pereira, 30575-831 Belo Horizonte (BR); SOARES TEIXEIRA, Gustavo Júlio, 32013-550 Contagem (BR)
(74) Representative: Faraldi, Marco
(86) International application number: PCT/BR2019/050508
(87) International publication number: WO 2020/113294

(57) **Abstract**

The present invention refers, in a general sense, to a system for pressurizing gas for stationary engines comprising technical and constructive aspects capable of achieving a gas supply with adequate, stable and safe pressure, in order to ensure the working efficiency of said stationary engines. More specifically, the system of the present invention is formed of a gas supply pipe (1) connected, on one side to the local gas network, and on the other to a compressor (20) that is connected through a first pipe (2) to a compensating tank (30) which, in turn, it is connected to the combustion chamber of the stationary engine (MC) through a second pipe (3) provided with at least one regulating valve (40) that controls the pressure supplied to the stationary engine (MC) which, in turn, is connected to an electrical generator (G) of the power grid and at least one battery (B). The present invention also comprises a gas pressurization kit for stationary engines, such as electric power generators.

## Description

### FIELD OF THE INVENTION

This invention refers, generally, to a new system for pressurizing gas for stationary engines comprising technical, constructive and functional characteristics designed and developed to assure the adequacy of the pressure of the gas supply to a combustion engine, of the stationary type, such as those usually used, for example, in electric power generators.

Moreover, the present invention comprises a natural gas pressurization kit specially designed to be used in stationary engines, such as those used in electric generators.

### GROUNDS OF THE INVENTION

As is commonly knowledge of the state of the art, several models of stationary engines are known for a variety of applications, for example, for driving electric generators, mills, pumps, tools and equipment in general. Typically, these engines are of the internal combustion type, which can use a wide variety of fuels, such as diesel, gasoline, ethanol, and natural gas, among others.

As should be understood by persons skilled in the art, the most common stationary engine models known to the state of the art, and principally used in the assembly of power generators, are powered by diesel due to the energy efficiency of the assembly as a whole and its properties. However, it is known that these diesel engines require a relatively large tank for fuel storage and relatively high frequency maintenance, in addition to presenting environmental problems due to their high levels of pollution when compared with other fuels and other energy options.

In order to resolve some of the drawbacks and limitations of diesel engines, some designs of engines powered by gas, such as natural gas, are known. However, although some designs were able to eliminate the need for large fuel storage tanks and the levels of pollutants emitted into the environment, efficiency problems were encountered, particularly due to the pressure conditions of the gas supply in the engines.

More specifically, it has been observed that the natural gas supply network provides insufficiently low pressure for the proper operation of combustion engines and, for this reason, in practice, it is not possible to achieve minimally viable levels of work for the use of these technologies in an operational sense, rendering necessary complex and high-cost adaptations that make it unfeasible to make this type of technology available to the current market.

Another problem of the technologies known to the state of the art that use natural gas-powered combustion engines concerns the equalization of the supply pressure, because, as should be understood by persons skilled in the art, gas networks often suffer variations that can affect the continuous operation of the engines and, consequently, compromise work efficiency.

In this context, as can be seen, the stationary engines known to the state of the art lack a simple and effective solution that assures continuous and equalized supply of the gas, allowing for the proper and safe operation of the engines. Thus, it has been found that the stationary engine technologies known to the state of the art could be modified and improved to ensure the safe and stable operation of the gas engines. They represent what, in a certain way, it is intended to achieved through the development of the present invention.

### DESCRIPTION OF THE INVENTION

In view of all the above, it is one of the objectives of this invention to provide a new system for the pressurization of gas for stationary engines, which has been designed and developed to achieve a practical and functional solution to the problems, limitations and inconveniences apparent in the state of the art, as summarized above and, thus, provide a gas supply with adequate, stable and safe pressure, ensuring the work efficiency of these stationary engines.

This invention also comprises a natural gas pressurization kit designed and developed to be used in stationary engines, such as electrical generators, tools and equipment in general, as well as for driving mills and other machines.

Thus, considering the above, and in order to achieve the technical and functional objectives and effects indicated above, the present invention concerns a system for pressurizing gas for stationary engines that comprises a gas supply pipe connected, on one side, to the local gas network and, on the other, to a compressor that is connected through a first pipe to a compensating tank which, in turn, is connected to the combustion chamber of the stationary engine through a second pipe that is equipped with at least one regulator valve to control the pressure supplied to the stationary engine. The said stationary engine is connected to an electric power generator of the power grid and at least one battery.

According to one embodiment of the present invention, this gas supply pipe is fluidly connected to the natural gas supply network, such as the gas network of a residence, condominium, commercial establishment or factory. Optionally, in accordance with one embodiment of the present invention, this gas supply pipe is connected to the gas supply network through a pressure regulating valve.

According to another embodiment of the present invention, said compressor is of the electric type and comprises an electric engine. Optionally and in a complementary manner, as another embodiment of the present invention, this electric engine is also connected to a battery or the local power grid.

Alternatively, according to one embodiment of the present invention, said compressor is of the mechanical type and is connected to the power outlet of said stationary engine. Moreover, in accordance with another embodiment of the present invention, this compressor can be of the electric or hybrid type.

Additionally, according to one embodiment of the present invention, the compensating tank comprises an internal pressure sensor connected to said compressor. According to another realization of this system, this sensor is connected to a frequency inverter which, in turn, is connected to said electric engine of the compressor.

In accordance with another embodiment of the present invention, said battery is powered by an alternator that is connected to the power outlet of the stationary engine.

Additionally, the present invention also comprises a gas pressurization kit for stationary engines, which is formed basically of the following elements:
- a compressor equipped with a gas supply pipe and a first pipe;
- a compensating tank equipped with a sensor, a pressure regulator valve and a second pipe for connection to the combustion chamber of the stationary engine.

According to one embodiment of the present invention, this kit is used in an electric power generator.

According to another embodiment of the present invention, said compressor of the kit is of the electric type and has an electric engine. Additionally, according to one embodiment of the present invention, this kit also comprises a frequency inverter for connection to said compressor.

Furthermore, as another embodiment of the present invention, said compressor is of the mechanical type and is connected to a power output of the stationary engine.

### SUMMARIZED DESCRIPTION OF THE DRAWINGS

The characteristics, advantages and technical effects of the present invention, as indicated above, will be understood more clearly by a person skilled in the art from the following detailed description, produced merely for exemplative, non-restrictive purposes, of preferred embodiments, and with reference to the attached schematic figures, which show:
Figure 1 shows a schematic representation of the gas pressurization system for stationary engines, according to one embodiment of the present invention;

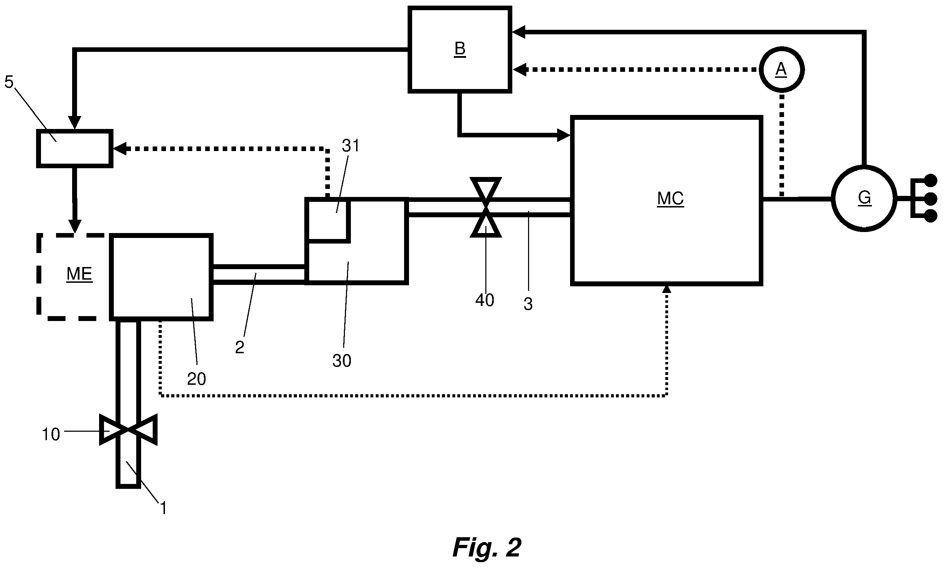

Figure 2 shows a schematic representation of the gas pressurization system for stationary engines, according to another embodiment of the present invention

### DESCRIPTION OF EMBODIMENTS OF THE INVENTION

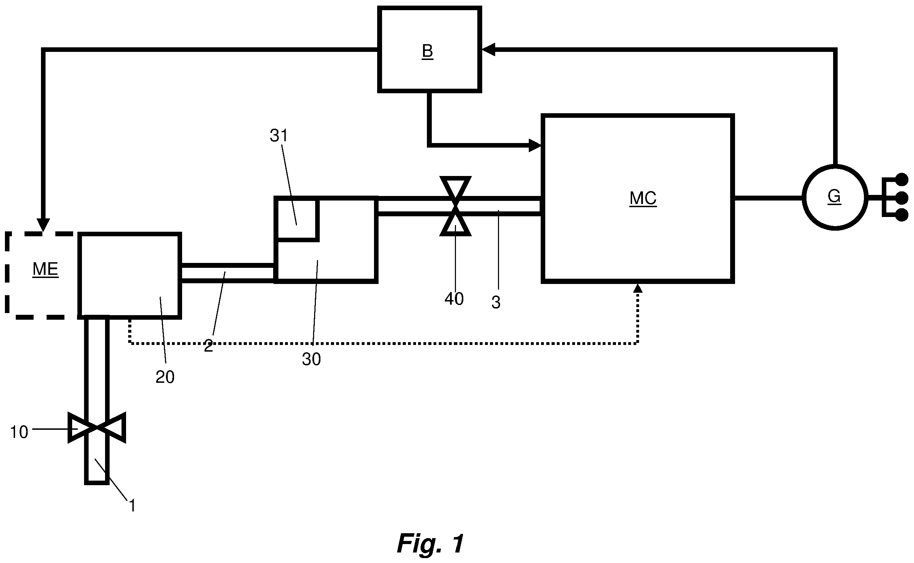

The invention will now be described in relation to its particular embodiments, making reference to the attached figures. These figures are schematic, and their dimensions, positions and/or proportions may not correspond to reality, since they aim to describe the invention didactically. In addition, certain known and common constructive details may have been omitted for clarity and conciseness of the description provided below. The terms periodically used, such as "above", "below", "front", "back", "right", "left" etc. and their variants should be interpreted according to the guidance given in Figure 1.

In this context, the present invention refers to a new system for the pressurization of gas for stationary engines comprising a gas supply pipe 1 that is connected, at one point to the local gas network, and at another to a compressor 20, which is connected through a first pipe 2 to a compensating tank 30 that is connected to the combustion chamber of said stationary engine (MC) through a second pipe 3 provided with at least one regulator valve 40 whose purpose is to keep the pressure of the gas supplied to the said stationary engine (MC) stable which, in turn, is connected to an electric generator (G) that supplies the electrical network and, at the same time, is connected to a battery (B), where this battery is connected to the stationary engine (MC), specifically to initiate its operation.

According to one embodiment of the present invention, the gas pressurization system for stationary engines is connected to the pipelines of the local natural gas network, which may be, for example, the gas network of a residence, a condominium, a commercial establishment or a factory, etc. Optionally, according to one embodiment of the present invention, this gas supply pipe 1 is connected to the gas supply network through a pressure regulator valve 10 responsible for regulating the input pressure to this system and also allowing for the possible interruption of the gas supply, for example, during the process of maintenance and/or the changing of components and parts of the system and stationary engine itself, where applicable.

According to one embodiment of the present invention, said compressor 20 may be of any model capable of pressurizing and increasing the pressure of the gas being supplied by the local network through the gas supply pipe 1. More specifically, this compressor 20 is of the electric type and, in this case, comprises an electric engine (ME) whose main purpose is to enable the activation of the compressor 20 to supply the said compensating tank 30 until it can achieve the minimum regulated pressure for the start-up of the stationary engine operating cycle (MC).

Optionally and in a complementary manner, according to another realization of the present invention, the said electric engine (ME) can be connected to the local electrical network to thus start the operating cycle of the stationary engine, for example if the battery (B) has insufficient charge to drive the electric engine (ME).

Alternatively, this compressor 20 may be of the mechanical type and be connected to the power outlet of said stationary engine (MC), and the compressor may, for example, normally be incorporated into and driven by the engine itself (MC). In this case, to enable the startup of the operating cycle of the stationary engine (MC), it is possible to supply the said compensating tank 30 at a gas supply site, for example a gas station, so that it possesses the minimum working pressure and can supply gas to the engine under appropriate conditions until the compressor 20 can assure the maintenance of the pressure.

In accordance with one practical, conventional and currently available application, and merely to exemplify the operation of the system of the present invention, the gas supply network connected to the gas supply pipe 1 provides natural gas at a pressure of 0.4-4 bar, where said compressor 20 performs the pressurization of the natural gas by increasing the pressure to about 15-20 bar which is maintained inside the compensating tank 30, where said regulator valve 40 controls the supply of the natural gas to the stationary engine (MC) at a pressure below 15-20 bar, for example at 9 bar which is the recommended working pressure for engines produced and used, for example, by CNH Industrial N. V.

Obviously, each engine can be configured and adjusted to work at different gas supply pressure levels, which will depend on the interests and models available in the market. In these cases, as can be seen, the said pressure regulator valve 40, positioned at the outlet of the compensating tank 30, will perform the pressure control according to the adjusted characteristics of the stationary engine in order to obtain the maximum working efficiency of these engines.

Additionally, according to one embodiment of the present invention, said compensating tank 30 may comprise an internal pressure sensor 31 that is, in some way, connected to the compressor 20 to thereby keep the pressure of said compensating tank 30 above the supply pressure of the stationary engine (MC). Thus, as this sensor 31 detects that the internal pressure in the compensating tank 30 has begun to drop, the compressor can then be triggered to supply the natural gas and raise the pressure of the system.

According to another embodiment of this system, the communication between the sensor 31 installed in the compensating tank 30, can be mediated through a frequency inverter 5, whose purpose is to control the power supplied to the electric engine (ME) and thus keep the electric engine constantly activated, avoiding the power surges that occur during its conventional activation. More specifically, when the sensor 31 detects a drop in the pressure of the tank 30, the inverter increases the power of the engine (ME) and consequently of the compressor 20, causing the pressure inside the tank 30 to increase to a preset value, and thus the inverter 5 reduces the power of the engine (ME) keeping the pressure inside tank 30 stable and the engine (ME) activated.

In accordance with another embodiment of the present invention, the present system may comprise an alternator (A) connected to the power output of the stationary engine (MC). In this case, this alternator acts as an alternative and complementary source to the generator (G) to power and charge the battery (B).

Additionally, as mentioned above, the present invention also comprises a natural gas pressurization kit for stationary engines, whose purpose is to provide an efficient and low cost means for adjusting stationary engines, such as electric generators installed in homes, condominiums, commercial establishments and factories that are already adapted to the natural gas supply network, where this natural gas pressurization kit is formed of:
- a compressor 20 equipped with a gas supply pipe 1 and a first pipe 2;
- a compensating tank 30 equipped with a sensor 31, a pressure regulator valve 40 and a second pipe 3 for connection to the combustion chamber of the stationary engine (MC), and
- it is designed to be installed in a generator (G) using the power outlet of the engine (MC) and to be electrically connected to a battery (B) which, in turn, provides power for the activation of the stationary engine (MC).

According to one embodiment of the natural gas pressurization kit, in accordance with this invention, said compressor 20 is connected to the compensating tank 30 in order to increase the pressure of the natural gas supply network and, thus, keep it stable for the supply of the stationary engine (MC) through said pressure regulator valve 40.

According to one embodiment of the kit of the present invention, this compressor 20 is of the electric type and comprises an electric engine (ME) whose main purpose is to perform the activation of the compressor 20 in order to supply said compensating tank 30 until it can achieve the minimum regulated pressure for the startup of the operating cycle of the stationary engine (MC).

Alternatively, the said compressor 20 can be of the mechanical type and is connected to a power outlet of said stationary engine (MC).

According to another embodiment of the kit, in accordance with the present invention, the control of the internal pressure of the compensating tank 30 is performed through a frequency inverter 5, whose purpose is to control the power of the electric engine (ME) according to the measurement of the pressure from the sensor (31).

The natural gas pressurization kit, which is the object of the present invention, can also include additional pressure regulator valves and complementary pipes to provide the fluidic connection between the local gas supply network and the stationary engine (MC), in order to keep the natural gas supply continuous and stable.

In view of everything presented above, it is important to make clear that this description is intended merely to present and describe, in an exemplative manner, some possible embodiments of the system for the pressurization of gas for stationary engines, according to the present invention. For these reasons, as the persons skilled in the art must understand, several modifications and constructive combinations of equivalent elements are possible without, thus, exceeding the scope of protection described in the attached claims.

## Claims

1. GAS PRESSURIZATION SYSTEM FOR STATIONARY ENGINES, **characterized by** the fact that it comprises a gas supply pipe (1) connected, on one side to the local gas network, and on the other side to a compressor (20) that is connected through a first pipe (2) to a compensating tank (30) which, in turn, is connected to the combustion chamber of the stationary engine (MC) through a second pipe (3) provided with at least one regulator valve (40) that controls the pressure supplied to the stationary engine (MC) which, in turn, is connected to an electrical generator (G) of the power grid and at least one battery (B).

2. SYSTEM, according to claim 1, **characterized by** the fact that the gas supply pipeline (1) is fluidly connected to the natural gas supply network, such as the gas network of a residence, condominium, commercial establishment or factory.

3. SYSTEM, according to claim 1, **characterized by** the fact that said gas supply pipe (1) is connected to the gas supply network through a pressure regulator valve (10).

4. SYSTEM, according to claim 1, **characterized by** the fact that said compressor (20) is of the electric type and comprises an electric engine (ME).

5. SYSTEM, according to claim 4, **characterized by** the fact that said electric engine (ME) is connected to said battery (B) or the local power grid.

6. SYSTEM, according to claim 1, **characterized by** the fact that said compressor (20) is of the mechanical type and is connected to the power outlet of the stationary engine (MC).

7. SYSTEM, according to claim 1, **characterized by** the fact that said compressor (20) is of the electric or hybrid type.

8. SYSTEM, according to claim 1, **characterized by** the fact that said compensating tank (30) comprises an internal pressure sensor (31) connected to said compressor (20).

9. SYSTEM, according to claim 8, **characterized by** the fact that said sensor (31) is connected to a frequency inverter (5) which, in turn, is connected to the electric engine (ME).

10. SYSTEM, according to claim 1, **characterized by** the fact that said battery (B) is powered by an alternator (A) connected to the power outlet of the stationary engine (MC).

11. GAS PRESSURIZATION KIT FOR STATIONARY ENGINES, **characterized by** the fact that it comprises:
- a compressor (20) equipped with a gas supply pipe (1) and a first pipe (2);
- a compensating tank (30) equipped with a sensor (31), a pressure regulator valve (40) and a second pipe (3) for connection to the combustion chamber of the stationary engine (MC).

12. KIT, according to claim 11, **characterized by** the fact that it is used in an electric power generator (G).

13. KIT, according to claim 11, **characterized by** the fact that said compressor (20) is of the electric type and comprises an electric engine (ME).

14. KIT, according to claim 13, **characterized by** the fact that it also comprises a frequency inverter (5) for connection to said compressor (20).

15. KIT, according to claim 11, **characterized by** the fact that said compressor (20) is of the mechanical type and is connected to a power outlet of said stationary engine (MC).
